# EUROPÄISCHE PATENTANMELDUNG

(11) **EP 2 705 880 A1**
(43) Veröffentlichungstag der Anmeldung: **12.03.2014**
(21) Anmeldenummer: 12183217.4
(22) Anmeldetag: 05.09.2012
(51) Int. Cl.: A62B 7/14, A62B 25/00, B64D 11/00

(54) **Vorrichtung zum Auswerfen einer Sauerstoffmaske**

(71) Anmelder: INTERTECHNIQUE, 78373 Plaisir Cedex (FR)
(72) Erfinder: Hollm, Marco, 25548 Rosdorf (DE); Westphal, Andreas, 23701 Eutin (DE)
(74) Vertreter: Eisenführ Speiser

(57) **Zusammenfassung**

Die Erfindung betrifft Vorrichtung zum Auswerfen einer Sauerstoffmaske. Die Vorrichtung umfasst ein Gehäuse (3) mit einer Gehäuseöffnung (9) und mit einem Gehäusedeckel (5), der zwischen einer Schließposition (7), in der die Gehäuseöffnung (9) zumindest abschnittsweise von dem Gehäusedeckel (5) bedeckt ist, und einer Öffnungsposition (50) bewegbar ist, eine Sauerstoffmaske (12; 13), die in der Schließposition (7) in dem Gehäuse (3) angeordnet ist, und ein Auswurfband (20; 22) mit einem Ende (25; 27), welches mit dem Gehäusedeckel (5) verbunden ist. Die Erfindung ist weiter dadurch gekennzeichnet, dass das Auswurfband (20; 22) in der Schließposition (7) derart mit einer dem Gehäusedeckel (5) abgewandten Seite der Sauerstoffmaske (12; 13) zusammenwirkt, dass die Sauerstoffmaske (12; 13) durch Bewegen des Gehäusedeckels (5) in die Öffnungsposition (50) aus dem Gehäuse (3) ausgeworfen wird.

## Beschreibung

Die Erfindung betrifft eine Vorrichtung zum Auswerfen einer Sauerstoffmaske, umfassend ein Gehäuse mit einer Gehäuseöffnung und mit einem Gehäusedeckel, der zwischen einer Schließposition, in der die Gehäuseöffnung zumindest abschnittsweise von dem Gehäusedeckel bedeckt ist, und einer Öffnungsposition bewegbar ist, eine Sauerstoffmaske, die in der Schließposition in dem Gehäuse angeordnet ist, und ein Auswurfband mit einem Ende, welches mit dem Gehäusedeckel verbunden ist.

Vorrichtungen zum Auswerfen von Sauerstoffmasken sind insbesondere aus der Luftfahrt beispielsweise in Luftfahrzeugen bekannt. Insbesondere bei einem Druckabfall in der Passagierkabine eines Luftfahrzeugs ist es notwendig, dass eine Sauerstoffmaske aus dem Gehäuse ausgeworfen wird, damit der Passagier zeitnah nach dem Druckabfall die Sauerstoffmaske zur Versorgung mit Sauerstoff aufsetzten kann. In der Regel ist das Gehäuse dabei in der Nähe des Kopfes des Passagiers angeordnet. Für die Sicherheit der Passagiere und der Crewmitglieder eines Luftfahrzeugs ist es daher wünschenswert, dass die Sauerstoffmasken besonders zuverlässig auf dem Gehäuse ausgeworden werden.

Vor diesem Hintergrund ist es Aufgabe der vorliegenden Erfindung eine verbesserte Vorrichtung zum Auswerden einer Sauerstoffmaske anzugeben.

Diese Aufgabe wird erfindungsgemäß gelöst durch eine Vorrichtung der eingangs genannten Art, bei welcher das Auswurfband in der Schließposition derart mit einer dem Gehäusedeckel abgewandten Seite der Sauerstoffmaske zusammenwirkt, dass die Sauerstoffmaske durch Bewegen des Gehäusedeckels in die Öffnungsposition aus dem Gehäuse ausgeworfen wird.

Mit der Erfindung wurde erkannt, dass bei bisher bekannten Vorrichtungen zum Auswerfen von Sauerstoffmasken ein Auswurfband an dem Gehäuse und an dem Gehäusedeckel befestigt ist. Dabei wurde das Auswurfband im geöffneten Zustand des Gehäusedeckels derart gespannt, dass die Sauerstoffmaske aus dem Gehäuse ausgeworfen wurde. Bei unsachgemäßer Anwendung der Auswurfvorrichtung, z.B. durch ungeschultes Personal, wurde beim Schließen des Gehäusedeckels das Auswurfband häufig lose zwischen Gehäusedeckel und Sauerstoffmaske gelegt, so dass es seine Auswurfwirkung beim Bewegen des Gehäusedeckels in die Öffnungsposition nicht entfalten konnte, d.h. die Sauerstoffmaske blieb in dem Gehäuse liegen bzw. hängen.

Durch die vorliegende Erfindung werden diese Nachteile überwunden. D.h. dadurch, dass das Auswurfband nicht mehr mit dem Gehäuse verbunden ist, wird einer Bedienperson unmissverständlich verdeutlicht, wie das Auswurfband beim Schließen des Gehäusedeckels (z.B. nach einem Test der Vorrichtung) derart angeordnet werden muss, dass ein Zusammenwirken des Auswurfbandes in der Schließposition des Gehäusedeckels mit einer dem Gehäusedeckel abgewandten Seite der Sauerstoffmaske möglich wird. Somit wird mit der vorliegenden Erfindung ein Sicheres Auswerfen der Sauerstoffmaske aus dem Gehäuse erzielt.

Unter dem Begriff "Gehäuse" ist im Rahmen der vorliegenden Erfindung vorzugsweise ein im Wesentlichen quaderförmiges Gehäuse zu verstehen, welches beispielsweise aus Kunststoff besteht und in ein Element der Passagierkabine, beispielsweise in den Sitz des Vordermanns oder eine Armatur oberhalb des Passagiers, eingelassen ist. Als Gehäuseöffnung kann im Rahmen der vorliegenden Erfindung verstanden werden, dass eine Flachseite des quaderförmigen Gehäuses, offen ist, d.h. keine Gehäusewandung aufweist. Zudem kann der Begriff "Gehäusedeckel" im Rahmen der vorliegenden Erfindung verstanden werden als Wandung aus Kunststoff mit einer Breitseite, deren Fläche im Wesentlichen der Öffnungsfläche entspricht. Die Sauerstoffmaske ist vorzugsweise eine Sauerstoffmaske, wie sie in Passagierflugzeugen in der Regel Verwendung findet.

Der Begriff "Auswurfband" ist im Rahmen der vorliegenden Erfindung vorzugsweise zu verstehen als Band, welches aus einem Textilstoff besteht.

Gemäß einer bevorzugten Ausführungsform der erfindungsgemäßen Vorrichtung hintergreift das Auswurfband eine dem Gehäusedeckel abgewandte Seite der Sauerstoffmaske zumindest teilweise. Damit ist eine besonders einfache Ausgestaltung des Zusammenwirkens zwischen dem Auswurfband und einer dem Gehäusedeckel abgewandten Seite der Sauerstoffmaske bereitgestellt.

Nach einer weiteren bevorzugten Ausführungsform der erfindungsgemäßen Vorrichtung hintergreift das Auswurfband eine dem Gehäusedeckel abgewandte Seite der Sauerstoffmaske zumindest teilweise mittels einer Tasche des Auswurfbandes. Vorzugsweise ist die Tasche in einem Endbereich des Auswurfbandes ausgebildet. Das Auswurfband weist dabei vorzugsweise eine Länge auf, die ein Auswerfen der Sauerstoffmaske begünstigt.

Weiter bevorzugt wird das Auswurfband in der Schließposition gebildet von dem Ende, welches mit dem Gehäusedeckel verbunden ist, einem Übergangsabschnitt, der sich ausgehend von dem Ende entlang einer Seite, vorzugsweise oberhalb der Sauerstoffmaske erstreckt, einem Hintergreifabschnitt, der sich ausgehend von dem Übergangsabschnitt entlang einer dem Gehäusedeckel abgewandten Seite der Sauerstoffmaske erstreckt, und einem Endabschnitt, der sich ausgehend von dem Hintergreifabschnitt entlang einer weiteren Seite, vorzugsweise unterhalb der Sauerstoffmaske erstreckt. Weiter bevorzugt umfasst das Auswurfband einen Seitenabschnitt, der sich seitlich entlang des Auswurfbandes zwischen dem Hintergreifabschnitt und dem Endabschnitt erstreckt. Hintergreifabschnitt, Endabschnitt und Seitenabschnitt bilden vorzugsweise die Tasche.

In einer noch weiteren bevorzugen Ausführungsform der erfindungsgemäßen Vorrichtung ist der Gehäusedeckel schwenkbar zwischen der Schließposition und der Öffnungsposition ausgebildet. Dies ist beispielsweise derart zu verstehen, dass der Gehäusedeckel an einem Gehäusedeckelende mittels eines Gelenks mit dem Gehäuse, insbesondere an einem Rand der Gehäuseöffnung, verbunden ist. Durch Schwenken wird der Gehäusedeckel dabei von der Schließposition in die Öffnungsposition aufgeklappt bzw. von der Öffnungsposition in die Schließposition zugeklappt.

Ein bevorzugtes Ausführungsbeispiel der Erfindung wird beispielshaft anhand der beiliegenden Figuren beschrieben. Es zeigen:
- Fig. 1: eine perspektivische Ansicht eines Ausführungsbeispiels der erfindungsgemäßen Vorrichtung in einem ersten Zustand,
- Fig. 2: eine perspektivische Ansicht des in Fig. 1 gezeigten Ausführungsbeispiels der erfindungsgemäßen Vorrichtung in einem zweiten Zustand,
- Fig. 3: eine Frontansicht des in den Figuren 1 und 2 gezeigten Ausführungsbeispiels der erfindungsgemäßen Vorrichtung in dem zweiten Zustand und
- Fig.4: eine Seitenansicht des in den Figuren 1 bis 3 gezeigten Ausführungsbeispiels der erfindungsgemäßen Vorrichtung in dem zweiten Zustand.

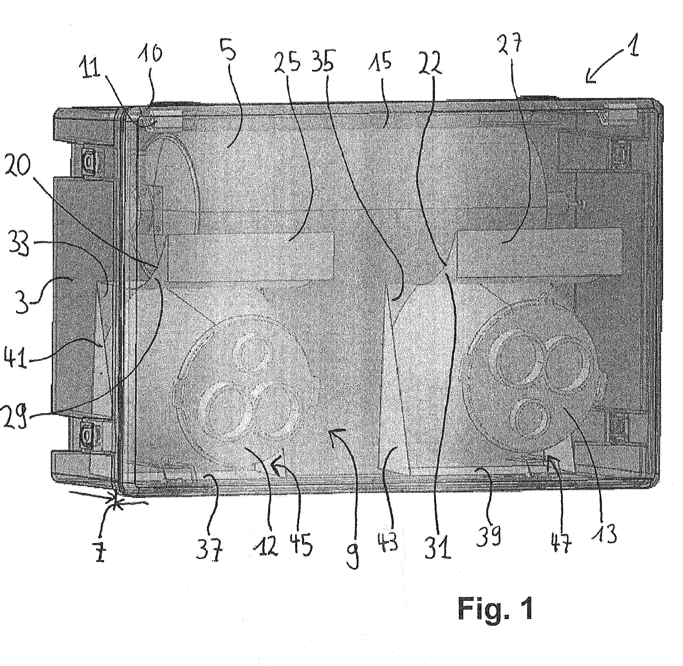

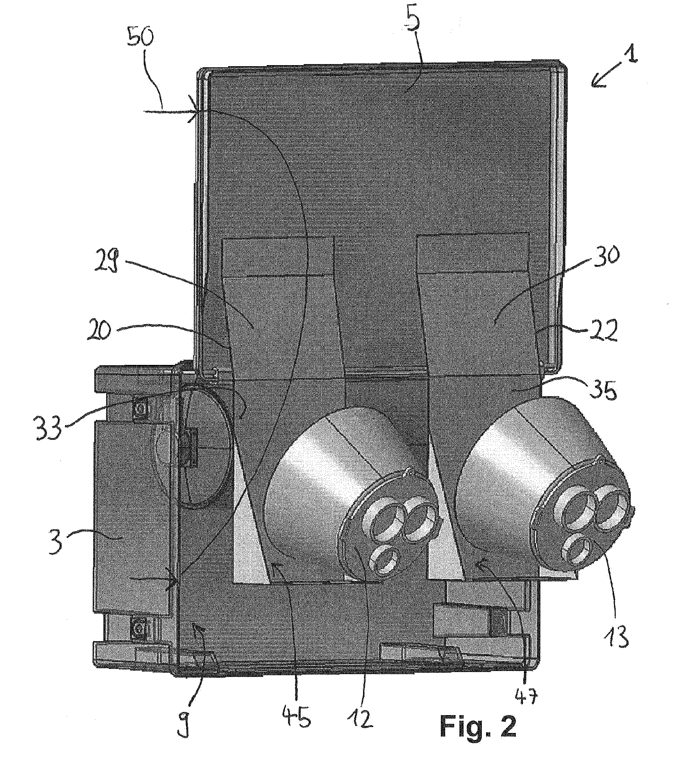

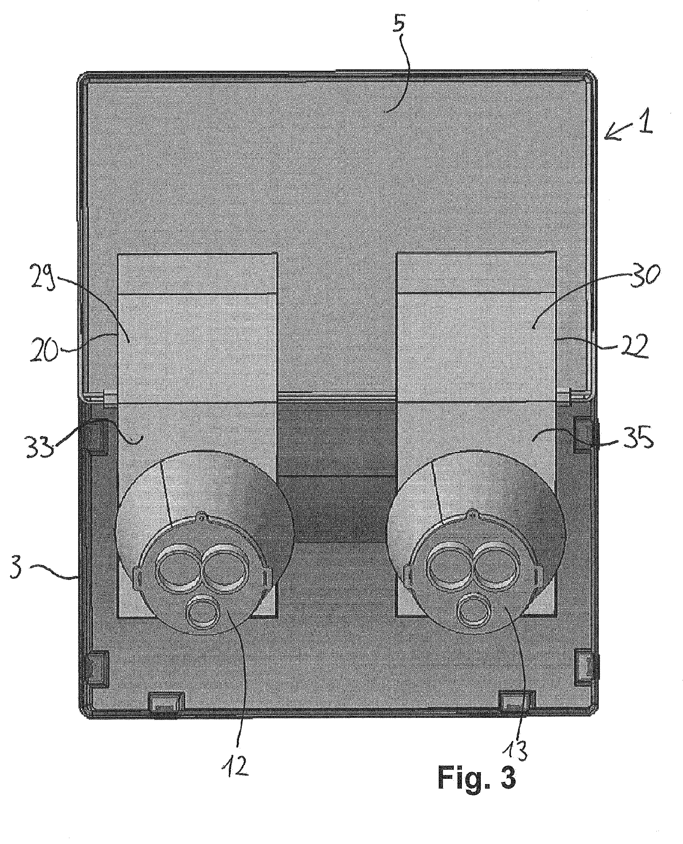

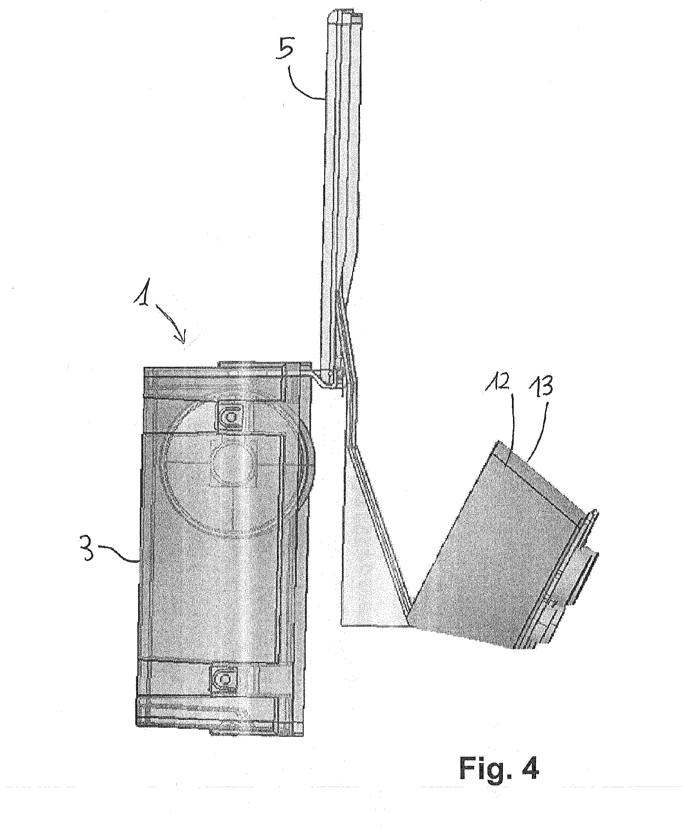

Die Figuren 1 bis 4 zeigen ein Ausführungsbeispiel einer erfindungsgemäßen Vorrichtung 1 in einem ersten und zweiten Zustand. Fig. 1 zeigt die Vorrichtung 1 mit einem Gehäuse 3 und einem Gehäusedeckel 5. Der Gehäusedeckel 5 ist zwischen der gezeigten Schließposition 7 und einer in den Figuren 2 bis 4 gezeigten Öffnungsposition schwenkbar. Mit anderen Worten: der erste Zustand der Vorrichtung zeichnet sich einerseits dadurch aus, dass sich der Gehäusedeckel 5 in einer Schließposition 7 befindet. In dieser Schließposition 7 wird eine Gehäuseöffnung 9 von dem Gehäusedeckel 5 verdeckt. Das in Fig. 1 gezeigte Gehäuse 5 ist mit teilweise durchsichtigen Gehäusewandungen gezeigt, so dass die Gehäuseöffnung 9 in Betrachtungsrichtung der Fig. 1 durch den Gehäusedeckel 5 hindurch erkennbar ist. Für das Schwenken des Gehäusedeckels 5 in die Öffnungsposition ist der Gehäusedeckel 5 an einem Ende 10 mit dem Gehäuse 3 mittels eines Gelenks 11 verbunden.

Zwei Sauerstoffmasken 12 und 13 sind in dem in Fig. 1 gezeigten Zustand benachbart zueinander in dem Gehäuse angeordnet. Oberhalb der Sauerstoffmasken 12 und 13 ist ein Sauerstoffbehälter 15 zur Versorgung der Sauerstoffmasken 12 und 13 mit Sauerstoff angeordnet. Sauerstoff aus dem Sauerstoffbehälter 15 wird über nicht gezeigte Versorgungsschläuche zu den Sauerstoffmasken 12 und 13 übertragen. Die Sauerstoffmasken 12 und 13, die Versorgungsschläuche und der Sauerstoffbehälter 15 bilden gemeinsam ein Sauerstoff-Modul.

Der Sauerstoffmaske 12 bzw. 13 ist jeweils ein Auswurfband 20 bzw. 22 zugeordnet. Das Auswurfband 20 bzw. 22 ist an einem Ende 25 bzw. 27 mit dem Gehäusedeckel 5 fest verbunden. Von diesem Ende aus erstreckt sich das Auswurfband 20 bzw. 22 oberhalb der Sauerstoffmaske 12 bzw. 13 und daran anschließend auf der dem Gehäusedeckel 5 abgewandten Seite der Sauerstoffmaske 12 bzw. 13 nach unten. Mit anderen Worten: von dem Ende 25 bzw. 27 des Auswurfsbandes 20 bzw. 22 verläuft ein Übergangsabschnitt 29 bzw. 31 des Auswurfbandes 20 bzw. 22 oberhalb der Sauerstoffmaske 12 bzw. 13. Vom diesem Übergangsabschnitt 29 bzw. 31 ausgehend erstreckt sich ein Hintergreifabschnitt 33 bzw. 35 des Auswurfbandes 20 bzw. 22 entlang einer dem Gehäusedeckel 5 abgewandten Seite der Sauerstoffmaske 12 bzw. 13. Zudem erstreckt sich ein Endabschnitt 37 bzw. 39 des Auswurfbandes 20 bzw. 22 ausgehend von dem Hintergreifabschnitt 33 bzw. 35 teilweise unterhalb der Sauerstoffmaske 12 bzw. 13. Schließlich erstreckt sich seitlich entlang des Auswurfbandes zwischen dem Hintergreifabschnitt 33 bzw. 35 und dem Endabschnitt 37 bzw. 39 ein Seitenabschnitt 41 bzw. 43 des Auswurfbandes 20 bzw. 22. Der Hintergreifabschnitt, Endabschnitt und die Seitenabschnitte bilden dabei eine Tasche 45 bzw. 47 des Auswurfbandes 20 bzw. 22.

Die Figuren 2 bis 4 zeigen die Vorrichtung 1 in dem zweiten Zustand, in dem sich der Gehäusedeckel 5 in einer Öffnungsposition 50 befindet, bei welcher die Gehäuseöffnung 9 geöffnet ist Gleiche und funktionsgleiche Element sind dabei in den unterschiedlichen Figuren mit denselben Bezugszeichen versehen. In der Öffnungsposition 50 ist das Auswurfband 20 bzw. 22 zumindest teilweise gestreckt, d.h. der Übergangsabschnitt 29 bzw. 31 und der Hintergreifabschnitt 33 bzw. 35 bilden einen im Wesentlichen geraden Verlauf des Auswurfbandes 20 bzw. 22.

Die Figuren 2 bis 4 zeigen jeweils eine Momentaufnahme, in der die Sauerstoffmaske 12 bzw. 13 aus der Tasche 45 bzw. 47 fällt. Daraus geht hervor, dass die Sauerstoffmaske 12 bzw. 13 während der Öffnungsbewegung des Gehäusedeckels 5 aus dem Gehäuse 3 herausgehoben wurde und nun im Begriff ist, aus der Tasche 45 bzw. 47 zu fallen.

## Patentansprüche

1. Vorrichtung zum Auswerfen einer Sauerstoffmaske, umfassend:
- ein Gehäuse (3) mit einer Gehäuseöffnung (9) und mit einem Gehäusedeckel (5), der zwischen einer Schließposition (7), in der die Gehäuseöffnung (9) zumindest abschnittsweise von dem Gehäusedeckel (5) bedeckt ist, und einer Öffnungsposition (50) bewegbar ist,
- eine Sauerstoffmaske (12; 13), die in der Schließposition (7) in dem Gehäuse (3) angeordnet ist,
- ein Auswurfband (20; 22) mit einem Ende (25; 27), welches mit dem Gehäusedeckel (5) verbunden ist,
**dadurch gekennzeichnet, dass**
- das Auswurfband (20; 22) in der Schließposition (7) derart mit einer dem Gehäusedeckel (5) abgewandten Seite der Sauerstoffmaske (12; 13) zusammenwirkt, dass die Sauerstoffmaske (12; 13) durch Bewegen des Gehäusedeckels (5) in die Öffnungsposition (50) aus dem Gehäuse (3) ausgeworfen wird.

2. Vorrichtung nach Anspruch 1,
bei welcher das Auswurfband (20; 22) eine dem Gehäusedeckel (5) abgewandte Seite der Sauerstoffmaske (12; 13) zumindest teilweise hintergreift.

3. Vorrichtung nach Anspruch 2,
bei welcher das Auswurfband (20; 22) in der Schließposition (7) eine dem Gehäusedeckel (5) abgewandte Seite der Sauerstoffmaske (12; 13) zumindest teilweise mittels einer Tasche (45; 47) des Auswurfbandes (20; 22) hintergreift.

4. Vorrichtung nach einem der vorstehenden Ansprüche,
bei welcher der Gehäusedeckel (5) schwenkbar zwischen der Schließposition (7) und der Öffnungsposition (50) ausgebildet ist.
